# FASCICULE DE BREVET EUROPEEN

(11) **EP 3 084 045 B1**
(45) Date de publication et mention de la délivrance du brevet: **14.02.2018**
(21) Numéro de dépôt: 14821577.5
(22) Date de dépôt: 16.12.2014
(51) Int. Cl.: H01M 8/20, C25D 5/04, C25D 17/12, H01M 8/18

(54) **DISPOSITIF DE STOCKAGE D'ÉNERGIE ÉLECTRIQUE DE GRANDE CAPACITÉ**
ENERGIESPEICHERVORRICHTUNG MIT GROSSER KAPAZITÄT
LARGE-CAPACITY ELECTRICAL-ENERGY STORAGE DEVICE

(30) Priorité: 16.12.2013 FR 1362726
(43) Date de publication de la demande: 26.10.2016
(73) Titulaire: AREVA, 92400 Courbevoie (FR)
(72) Inventeur: CAZENOBE, Gilbert, F-93170 Bagnolet (FR)
(74) Mandataire: Lavoix
(86) Numéro de dépôt international: PCT/EP2014/078002
(87) Numéro de publication internationale: WO 2015/091512

(56) Documents cités:
- WO-A2-2012/167057
- US-A- 1 513 119
- US-A1- 2013 045 399
- MOHAMMED HARUN CHAKRABARTI ET AL: "Redox Flow Battery for Energy Storage", ARABIAN JOURNAL FOR SCIENCE AND ENGINEERING, vol. 38, no. 4, 17 octobre 2012 (2012-10-17), pages 723-739, XP055114071, ISSN: 1319-8025, DOI: 10.1007/s13369-012-0356-5

## Description

L'invention concerne en général les dispositifs de stockage d'énergie électrique.

Plus précisément, l'invention concerne un dispositif de stockage d'énergie électrique comprenant une pluralité de cellules électrolytiques et un chargeur-onduleur électrique, chaque cellule électrolytique comprenant :
- un compartiment anodique rempli par un électrolyte anodique comprenant au moins des ions Fe³⁺ ;
- une électrode positive plongée dans l'électrolyte anodique et raccordée électriquement à une première borne du chargeur-onduleur ;
- un compartiment cathodique rempli par un électrolyte cathodique comprenant au moins des ions Fe²⁺, le compartiment cathodique étant séparé du compartiment anodique par une barrière poreuse ;
- une électrode négative plongée dans l'électrolyte cathodique et raccordée électriquement à une seconde borne du chargeur-onduleur ;
le chargeur-onduleur étant agencé pour sélectivement soit charger le dispositif de stockage en faisant circuler un courant électrique dans un premier sens provoquant un dépôt de fer à l'électrode négative, soit décharger le dispositif de stockage en laissant circuler un courant électrique dans un second sens opposé au premier provoquant une dissolution du fer déposé à l'électrode négative.

Un tel dispositif de stockage d'énergie est connu par exemple de CA 1 079 350.

Les besoins en stockage d'énergie électrique se sont considérablement accrus ces dernières années, avec notamment la mise en service de systèmes de production d'énergie renouvelable intermittente, comme les champs d'éoliennes ou les cellules photovoltaïques. Ces systèmes produisent à des périodes qui ne correspondent pas exactement aux périodes de consommation, d'où la nécessité de stocker l'énergie électrique produite pendant les périodes de basse consommation afin de pouvoir en disposer pendant les périodes de forte consommation.

Dans ce contexte, l'invention vise à proposer un dispositif de stockage d'énergie de plus grande capacité que celui de CA 1 079 350.

A cette fin, l'invention porte sur un dispositif de stockage d'énergie du type précité, caractérisé en ce que l'électrode négative et l'électrode positive sont disposées en vis-à-vis, la cellule électrolytique comprenant un dispositif d'entraînement en rotation de l'électrode négative par rapport à l'électrode positive autour d'un axe de rotation.

Ainsi, pendant la charge du dispositif de stockage, le fer se dépose sur toute la périphérie de l'électrode négative, au fur et à mesure que celle-ci passe en vis-à-vis de l'électrode positive. Le fer est déposé sur une grande surface, de manière régulière du fait du mouvement de rotation de l'électrode négative. Il est ainsi possible d'augmenter la quantité de fer déposée dans chaque cellule électrolytique, et d'augmenter la capacité de stockage du dispositif de stockage d'énergie électrique, proportionnellement à la masse déposée.

Le dispositif de stockage d'énergie peut également présenter un ou plusieurs des caractéristiques ci-dessous, considérées individuellement ou selon toutes les combinaisons techniquement possibles :
- l'électrode négative présente une surface externe cylindrique, coaxiale à l'axe de rotation, sur laquelle se dépose le fer ;
- l'électrode positive comporte une partie en forme de secteur de cylindre, coaxiale à l'axe de rotation ;
- l'électrode positive est poreuse pour l'électrolyte anodique et/ou cathodique, et définit la barrière entre le compartiment anodique et le compartiment cathodique ;
- l'électrode positive est en titane ou en éponge de titane ou en un alliage de titane ;
- l'électrode positive est recouverte d'un revêtement de TiN ;
- l'électrode positive est un tissu constitué d'au moins un fil entrelacé, en titane ou en un alliage de titane ;
- l'électrode positive est en un matériau électriquement conducteur, recouvert de magnétite ;
- la cellule électrolytique comprend :
   - un réservoir d'électrolyte anodique ;
   - un dispositif de transfert anodique susceptible de transférer l'électrolyte anodique entre le réservoir d'électrolyte anodique et le compartiment anodique ;
   - un réservoir d'électrolyte cathodique ;
   - un dispositif de transfert cathodique susceptible de transférer l'électrolyte cathodique entre le réservoir d'électrolyte cathodique et le compartiment cathodique ;
- l'axe de rotation de l'électrode négative est sensiblement horizontal, le dispositif de transfert cathodique comprenant une rampe de distribution d'électrolyte cathodique disposée au dessus de l'électrode négative ;
- le dispositif comprend un dispositif prévu pour maintenir un ciel de la cellule électrolytique sous une atmosphère de gaz neutre, par exemple sous pression d'argon ;
- le ciel de la cellule électrolytique est maintenu à une pression supérieure à la pression autour de la cellule électrolytique, de préférence supérieure de 1 à 10 daPa à la pression autour de la cellule électrolytique;
- le chargeur-onduleur est agencé pour, pendant la charge du dispositif de stockage, inverser temporairement le sens de circulation du courant ; et
- le chargeur-onduleur est agencé pour, pendant la charge du dispositif de stockage, faire circuler un courant alterné.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un dispositif de stockage d'énergie comprenant un grand nombre de cellules électrolytiques, seules certaines cellules étant représentées ; et
- la figure 2 est une représentation schématique simplifiée d'une cellule électrolytique du dispositif de la figure 1.

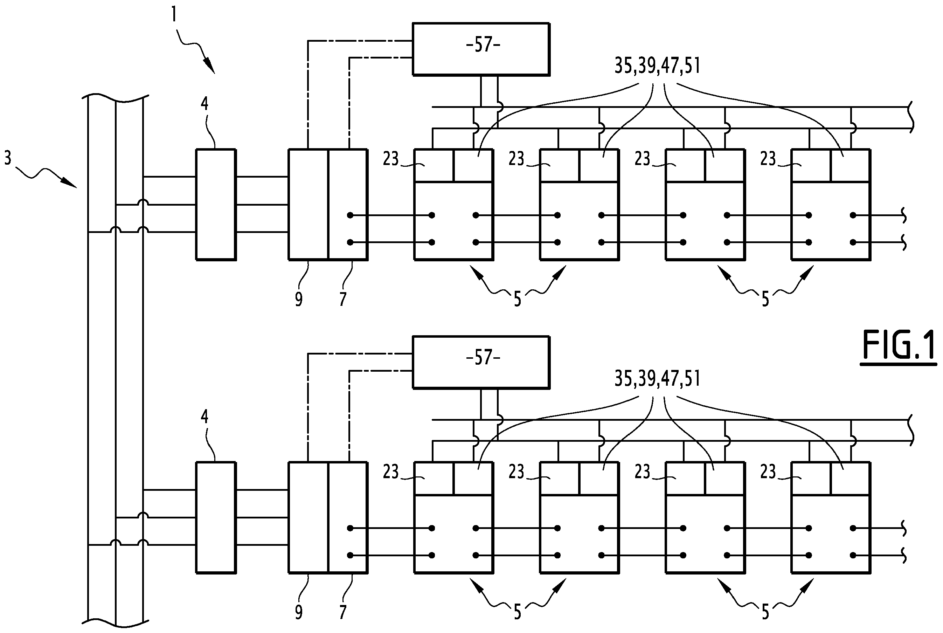

Le dispositif 1 représenté sur la figure 1 est destiné au stockage de l'énergie électrique. Le dispositif 1 est raccordé à un réseau 3 de distribution d'énergie électrique par l'intermédiaire d'un transformateur de puissance 4. Un certain nombre de systèmes de production d'énergie électrique (non représentés) alimentent le réseau 3 en courant électrique. Des consommateurs électriques (non représentés) sont également raccordés à ce réseau.

Le dispositif de stockage d'énergie 1 comprend un grand nombre de cellules électrolytiques 5, et un chargeur-onduleur électrique 7. Avantageusement, il comporte également un système 9 de gestion de l'interface réseau (Grid Interface Management System, ou GIMS).

Quand la puissance électrique fournie par les systèmes de production d'énergie est supérieure à la puissance appelée par les consommateurs électriques, le dispositif de stockage d'énergie 1, averti par le GIMS 9, accumule l'énergie en excès, en la convertissant sous forme électrochimique. Inversement, quand la puissance électrique appelée par les consommateurs est supérieure à la puissance produite, le dispositif 1, averti par le GIMS 9, convertit l'énergie accumulée sous forme électrochimique en énergie électrique, celle-ci alimentant le réseau 3.

Chaque cellule électrolytique 5 permet par exemple de stocker une énergie électrique d'environ 200 kWh. Les cellules électrolytiques 5 sont rassemblées en un ou plusieurs ensembles, chaque ensemble comportant par exemple 1300 cellules électrolytiques montées en série, pour une capacité de stockage d'énergie électrique d'environ 300 MWh. Chaque cellule électrolytique possède une puissance nominale de 20 kW. Un ensemble possède donc une puissance électrique nominale de l'ordre de 30 MW.

Le chargeur-onduleur électrique 7 alimente toutes les cellules électrolytiques 5 d'un même ensemble. En variante, le chargeur-onduleur électrique 7 n'alimente qu'une partie des cellules électrolytiques 5, le dispositif 1 comportant ainsi plusieurs chargeurs-onduleurs électriques 7 pour un même ensemble.

Chaque chargeur-onduleur électrique 7 est raccordé au réseau à travers le GIMS 9 et le transformateur de puissance 4. De préférence, chaque chargeur-onduleur électrique 7 est du type dit à 4 quadrants.

Le chargeur-onduleur 7 est réversible. Ainsi, il fonctionne en onduleur quand les cellules électrolytiques 5 se déchargent sur le réseau 3, et il fonctionne en redresseur quand, au contraire, les cellules électrolytiques 5 sont chargées à partir du réseau 3.

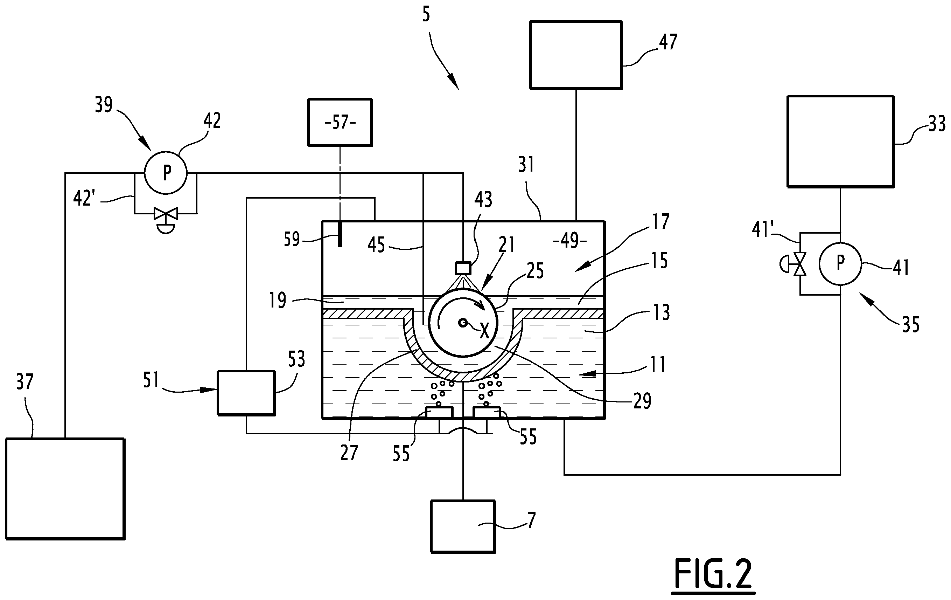

Les cellules électrolytiques 5 sont toutes identiques, et sont du type représenté schématiquement sur la figure 2.

En variante, certaines cellules électrolytiques ne sont pas du type représenté sur la figure 2.

Chaque cellule électrolytique 5 comprend :
- un compartiment anodique 11 rempli par un électrolyte anodique 13 ;
- une électrode positive 15 plongée dans l'électrolyte anodique et raccordée électriquement à une première borne du chargeur 7 ;
- un compartiment cathodique 17 rempli par un électrolyte cathodique 19, le compartiment cathodique 17 étant séparé du compartiment anodique 11 par une barrière poreuse ;
- une électrode négative 21 plongée dans l'électrolyte cathodique 19 et raccordée électriquement à une seconde borne du chargeur 7.

Le couple électrochimique côté électrode négative est Fe²⁺/Fe. Le couple électrochimique côté électrode positive est Fe²⁺/Fe³⁺.

Plus précisément, quand la cellule électrolytique 5 accumule l'énergie électrique, la réaction suivante se produit à l'électrode négative :

Fe²⁺ + 2e⁻ → Fe

La réaction suivante se produit à l'électrode positive :

2Fe²⁺ → 2Fe³⁺ +2e⁻

Quand la cellule électrolytique 5 fonctionne en générateur électrique, la réaction chimique suivante se produit à l'électrode négative :

Fe → Fe²⁺ + 2e⁻

La réaction suivante se produit à l'électrode positive :

2Fe³⁺ + 2e⁻ → 2Fe²⁺

En d'autres termes, la cellule électrolytique 5 accumule l'énergie sous forme électrochimique, en stockant cette énergie sous la forme d'un dépôt solide de fer sur l'électrode négative et d'une solution de Fe³⁺. Ce dépôt de fer se dissout et le Fe³⁺ redevient du Fe²⁺ quand la cellule 5 doit restituer de l'énergie électrique.

Le chargeur-onduleur 7 pilote la circulation du courant électrique. Quand la cellule électrolytique est en charge, le chargeur-onduleur 7 maintient l'électrode négative à un potentiel électrique négatif et l'électrode positive à un potentiel positif plus grand en valeur absolue que celui de l'électrode négative. Il fait donc circuler le courant électrique dans un premier sens, provoquant notamment un dépôt de fer à l'électrode négative.

Inversement, quand la cellule électrolytique 5 fonctionne en générateur électrique, le chargeur-onduleur 7 maintient l'électrode négative 21 à un potentiel inférieur à celui de l'électrode positive 15 . Le chargeur-onduleur 7 laisse donc circuler le courant dans un second sens inverse du premier sens, provoquant la dissolution du fer déposé sur l'électrode négative et la formation de Fe²⁺ à l'électrode positive.

Les termes « électrode positive » et « électrode négative » sont entendus ici conformément à la norme IEC 600-50-482, CEI60050-482 du 1/4/2004.

L'électrolyte anodique 13 comporte entre autre des ions Fe³⁺. Il est à un pH acide, de 2 environ et compte donc environ 10⁻² M de H⁺. Il comporte également au moins un anion, de préférence du Cl⁻. En variante, cet anion est le Br⁻, ou tout autre anion adapté, c'est-à-dire ne prenant pas part aux réactions.

L'électrolyte cathodique 19 comprend des ions Fe²⁺. Il est à un pH de 3 environ et compte donc environ 10⁻³ M de H⁺. Il comporte également au moins un anion, par exemple du Cl⁻. En variante, c'est anion est le Br⁻, ou tout autre anion adapté, c'est-à-dire ne prenant pas part aux réactions.

L'électrolyte anodique et l'électrolyte cathodique comportent éventuellement des additifs permettant d'augmenter la conductivité électrique sans avoir d'action aux électrodes. Ces additifs sont classiques et ne seront pas détaillés ici.

Comme visible sur la figure 2, l'électrode négative 21 et l'électrode positive 15 sont disposées en vis-à-vis, la cellule électrolytique 5 comportant un dispositif 23 (figure 1) d'entraînement en rotation de l'électrode négative 21 par rapport à l'électrode positive 15 autour d'un axe de rotation X. L'électrode négative 21 est donc rotative.

L'électrode négative 21 et l'électrode positive 15 sont coaxiales.

Ainsi, pendant le chargement du dispositif de stockage, le fer se dépose sur toute la périphérie de l'électrode négative, au fur et à mesure que celle-ci passe en vis-à-vis de l'électrode positive. Le fer est déposé sur une grande surface, de manière régulière du fait du mouvement de rotation de l'électrode négative. Il est ainsi possible d'augmenter la quantité de fer déposée dans chaque cellule électrolytique, et d'augmenter la capacité de stockage du dispositif de stockage d'énergie.

Typiquement, l'électrode négative 21 présente une surface externe 25 cylindrique, coaxiale à l'axe de rotation X, sur laquelle se dépose le fer quand la cellule électrolytique 5 fonctionne en récepteur électrique. En variante, l'électrode négative peut présenter une surface externe non cylindrique. Cette surface externe peut être tronconique, ou encore avoir la forme d'une autre surface de révolution autour de l'axe X. L'électrode négative 21 présente typiquement une longueur comprise entre 1,5m et 4m, et un diamètre externe compris entre 20cm et 1,5m. Dans la présente description les valeurs numériques correspondent à un exemple de réalisation dans lequel l'électrode négative présente une longueur de 4m et un diamètre de 20cm. Selon un autre exemple avantageux, l'électrode négative présente une longueur de 1,5m et un diamètre externe de 1,5m.

L'électrode négative est réalisée en un matériau bon conducteur électrique, comme l'aluminium ou l'acier.

Comme visible sur la figure 2, l'électrode positive comporte une partie 27 en secteur de cylindre, coaxiale à l'axe de rotation X. La partie 27 s'étend par exemple sur environ 180° autour de l'axe X, et forme donc un demi-cylindre. Un interstice 29 de faible épaisseur sépare donc la surface externe 25 de l'électrode négative et la partie 27 de l'électrode positive. Par exemple, l'interstice 29 présente une épaisseur comprise entre 0,1 et 20 mm, de préférence entre 1 et 15 mm, et valant typiquement 11 mm. Une épaisseur de 11 mm permet d'obtenir une capacité de stockage de 200 kWh par cellule.

En variante, la partie 27 en secteur de cylindre s'étend sur plus de 180° ou moins de 180° autour de l'axe de rotation X.

Comme visible également sur la figure 2, la cellule électrolytique 5 comporte une cuve 31, l'électrode positive 15 divisant le volume interne de la cuve entre une zone supérieure et une zone inférieure. La zone supérieure forme le compartiment cathodique 17. La zone inférieure forme le compartiment anodique 11. Celui-ci est situé sous le compartiment cathodique 17. La cuve 31 est étanche aux gaz et aux liquides.

L'électrode positive 15 a une structure poreuse pour l'électrolyte anodique et l'électrolyte cathodique. Elle est également poreuse aux gaz.

L'électrode positive 15 définit la barrière poreuse séparant le compartiment anodique du compartiment cathodique.

Typiquement, l'électrode positive est en titane ou en un alliage de titane, et est par exemple une toile ou une mousse. Selon une variante de réalisation, l'électrode positive est recouverte d'un revêtement de TiN, de manière à augmenter la durée de vie de l'électrode positive et à diminuer les pertes électriques.

Dans un exemple de réalisation, l'électrode positive est un tissu constitué d'au moins un fil entrelacé, en titane ou en un alliage de titane. Ce tissu peut être recouvert de TiN.

Par exemple, l'électrode positive est un grillage métallique vendu par la société GANTOIS, sous la référence 104613. Ce grillage est réalisé avec un fil titane T40, de diamètre avant tissage 0,8 mm. Il est caractérisé par un numéro métrique de 5 le numéro mesh étant de 4.57. L'ouverture nominale du tissu est de 4.75 mm, et la transparence de 73%. La masse par unité de surface est de 970 g/m². Le tissu présente une épaisseur comprise entre 1,4 et 1,6 mm. Ce grillage peut être recouvert de TiN.

Selon un autre exemple de réalisation, l'électrode positive est une toile métallique vendue par la société GANTOIS sous la référence 104125. Ce tissu est obtenu à partir de fils métalliques de titane T40, le fil de chaîne ayant un diamètre avant tissage de 0,36 mm et le fil de trame ayant un diamètre avant tissage de 0,265 mm. Le fil porte un numéro métrique de 22 pour le fil de chaîne et de 230 pour le fil de trame. La masse par unité de surface est 2400 g/m² et le tissu présente une ouverture nominale de 0.180 mm. Cette toile peut être recouverte de TiN.

Selon une autre variante de réalisation, l'électrode positive est en éponge de titane. L'éponge de titane est un produit intermédiaire en métallurgie du titane. Elle peut être recouverte de TiN.

Dans une variante de réalisation très économique, l'électrode positive 15 est en un matériau électriquement conducteur, recouvert de magnétite. Fe₃O₄. Par exemple, l'électrode positive est en cuivre aciéré, puis en partie oxydé électrolytiquement en Fe₃O₄.

La cellule électrolytique 5 comporte encore :
- un réservoir d'électrolyte anodique 33,
- un dispositif 35 de transfert anodique susceptible de transférer l'électrolyte anodique entre le réservoir d'électrolyte anodique 33 et le compartiment anodique 11 ;
- un réservoir d'électrolyte cathodique 37 ;
- un dispositif 39 de transfert cathodique susceptible de transférer l'électrolyte cathodique entre le réservoir d'électrolyte cathodique 37 et le compartiment cathodique 17.

Le dispositif de transfert anodique 35 comporte typiquement un organe de transfert 41, par exemple une pompe, raccordée d'un côté au réservoir 33 et de l'autre côté au compartiment anodique 11.

Dans l'exemple représenté sur les figures, le réservoir d'électrolyte anodique 33 est situé à une élévation supérieure à celle de la cellule 5. Le dispositif de transfert anodique 35 comporte un bipasse 41', mettant en communication le réservoir 33 avec le compartiment anodique en bipassant l'organe de transfert 41. Le bipasse 41' est équipé d'une vanne commandée, permettant de sélectivement obturer ou ouvrir le bipasse.

Quand la cellule électrolytique est en charge, l'organe de transfert 41 prélève l'électrolyte anodique dans le compartiment anodique 11 et le refoule dans le réservoir 33. Le bipasse 41' est obturé.

Inversement, quand la cellule électrolytique fonctionne en générateur électrique, l'organe de transfert 41 est à l'arrêt. Le bipasse 41' est ouvert. L'électrolyte anodique s'écoule par gravité et/ou par effet siphon depuis le réservoir 33 jusque dans le compartiment anodique, à travers le bipasse 41'.

De même, le dispositif 39 de transfert cathodique comporte un organe de transfert réversible 42, par exemple une pompe, raccordée d'un côté au réservoir 37 et de l'autre côté au compartiment cathodique 17.

Dans l'exemple représenté sur les figures, le réservoir d'électrolyte cathodique 37 est situé à une élévation inférieure à celle de la cellule 5. Le dispositif de transfert cathodique 39 comporte un bipasse 42', mettant en communication le réservoir 37 avec le compartiment cathodique en bipassant l'organe de transfert 42. Le bipasse 42' est équipé d'une vanne commandée, permettant de sélectivement obturer ou ouvrir le bipasse.

Quand la cellule électrolytique est en charge, l'organe de transfert 42 prélève l'électrolyte cathodique dans le réservoir 37 et le refoule dans le compartiment cathodique 17. Le bipasse 42' est obturé.

Inversement, quand la cellule électrolytique fonctionne en générateur électrique, l'organe de transfert 42 est à l'arrêt. Le bipasse 42' est ouvert. L'électrolyte cathodique s'écoule par gravité et/ou par effet siphon depuis le compartiment cathodique 17 jusque dans le réservoir 37.

En variante, les organes de transfert 41 et 42 sont réversibles. Les dispositifs de transfert anodique et cathodique 35 et 39 ne comportent pas de bipasses 41', 42'. La pompe 41 est utilisée pour transférer l'électrolyte anodique depuis le réservoir 33 dans le compartiment anodique 13. La pompe 42 est utilisée pour transférer l'électrolyte cathodique depuis le compartiment cathodique 15 dans le réservoir 37.

Comme illustré dans la figure 2, dans un mode de réalisation particulièrement avantageux, l'électrode négative tournante présente un axe de rotation X sensiblement horizontal. L'électrode négative 21 n'est que partiellement immergée dans l'électrolyte cathodique remplissant le compartiment 17. Le dispositif de transfert cathodique dans ce cas comporte une rampe de distribution 43 située au dessus de l'électrode négative 21. Typiquement, la rampe de distribution 43 s'étend le long de la génératrice située au point le plus élevé de la surface externe 25 de l'électrode négative.

La rampe de distribution 43 est percée d'une pluralité d'orifices à travers lesquels l'électrolyte cathodique refoulé par l'organe de transfert 41 s'écoule, et tombe sur la surface externe 25. Ainsi, l'électrolyte cathodique frais amené par le dispositif de transfert 39 est reparti uniformément sur toute la surface externe 25.

Dans ce mode de réalisation, le dispositif de transfert 39 comporte une tuyauterie de prélèvement 45 plongeante, dont une extrémité plonge en permanence dans l'électrolyte cathodique remplissant la chambre 17. La rampe 43 est utilisée quand le dispositif de transfert refoule l'électrolyte cathodique depuis le réservoir 37 jusque dans la chambre cathodique 17. La tuyauterie plongeante 45 est utilisée quand l'électrolyte cathodique circule en sens inverse, depuis la chambre 17 vers le réservoir d'électrolyte cathodique 37.

Dans un mode de réalisation non représenté, l'électrode négative 21 est entièrement immergée dans l'électrolyte cathodique. La rampe de distribution 43 est elle aussi immergée dans l'électrolyte cathodique et s'étend le long de la génératrice située au point le plus élevé de la surface externe 25. Dans ce cas, la rampe 43 est utilisée pour aspirer l'électrolyte cathodique quand celui-ci circule depuis la chambre 17 vers le réservoir d'électrolyte cathodique 37. Le dispositif de transfert 39 ne comporte pas de tuyauterie de prélèvement 45 plongeante.

En variante, l'axe de rotation X de l'électrode négative est vertical. Cette variante est avantageuse car elle réduit considérablement l'encombrement au sol de chaque cellule électrolytique.

Par ailleurs, la cellule électrolytique 5 comporte encore un dispositif 47 prévu pour maintenir le ciel 49 de la cellule électrolytique sous une atmosphère de gaz neutre. On entend ici par gaz neutre un gaz qui n'intervient pas dans les réactions chimiques et électrochimiques qui se déroulent dans le dispositif, et ne modifient pas la composition des matériaux constitutifs du dispositif.

Le gaz neutre est préférentiellement de l'argon. En variante, le gaz neutre est de l'azote, ou un autre gaz neutre, ou un mélange de gaz neutres.

Le dispositif 47 comporte par exemple une réserve de gaz sous pression raccordée au ciel 49 de la cellule électrolytique par le biais d'une ligne équipée d'un détendeur.

Selon un autre exemple de réalisation, le dispositif 47 comporte une réserve de gaz neutre et un compresseur refoulant le gaz neutre depuis la réserve jusque dans le ciel 49 de la cellule électrolytique.

Le ciel 49 de la cellule électrolytique est maintenu à une pression légèrement supérieure à la pression autour de la cellule électrolytique, de manière à empêcher l'oxygène de l'air de pénétrer à l'intérieur de la cellule électrolytique. Par exemple, le ciel 49 est maintenu à une pression légèrement supérieure à la pression atmosphérique, de 1 à 10 daPa relatifs.

Dans l'exemple de réalisation représenté sur la figure 2, le compartiment anodique 11 est entièrement rempli d'électrolyte anodique, alors que le compartiment cathodique 17, qui est situé au dessus du compartiment anodique 11, n'est que partiellement rempli d'électrolyte. Le ciel 49 correspond à la fraction du compartiment cathodique qui n'est pas rempli par l'électrolyte cathodique 19 et qui est rempli par le ou les gaz neutres.

La cellule électrolytique 5 comporte encore un dispositif 51 de recyclage de l'hydrogène gazeux dégagé dans le compartiment cathodique 17.

En effet, il se produit un dégagement d'hydrogène dans le compartiment cathodique, essentiellement pendant la charge. L'hydrogène gazeux aboutit dans le ciel 49 de la cellule électrolytique.

Le dispositif 51 comprend un organe de circulation 53, par exemple une pompe pour les gaz, dont l'aspiration communique avec le ciel 49, et le refoulement communique avec le compartiment anodique 11. L'organe de circulation 53 refoule la phase gazeuse occupant le ciel 49 vers une zone du compartiment anodique 11 située sous l'électrode positive, comme visible sur la figure 2. De préférence, ladite zone est située au contact immédiat de l'électrode positive. Ainsi, la phase gazeuse refoulée par l'organe 53 va former des bulles qui remonteront vers le ciel 49 en traversant l'électrode positive 15. En passant à travers l'électrode positive poreuse 15, les molécules d'hydrogène gazeux sont oxydées en H⁺ selon la demi-réaction H₂ → 2 H⁺ + 2 e⁻.

Le taux de recirculation imposé par le dispositif 51 est ajusté en fonction du dégagement d'hydrogène gazeux observé, de manière à garantir l'absence d'hydrogène gazeux dans le ciel 49 lors des périodes situées entre la charge et la décharge de la cellule électrolytique 5. Par exemple, le taux de recirculation est compris entre 50 et 500 l/h, de préférence entre 100 et 200 l/h, typiquement environ 160 l/h. Pendant la période de décharge, la recirculation n'est généralement pas nécessaire.

Typiquement, le dispositif 51 comprend une ou plusieurs rampes réparties sous l'électrode positive 15, dans le compartiment anodique 11. L'organe 53 refoule le gaz vers les rampes 55. Les rampes 55 présentent des orifices divisant le gaz en très fines bulles. On répartit ainsi de manière uniforme le gaz recyclé à l'intérieur du compartiment anodique afin de l'oxyder complètement.

Le dispositif 1 comporte encore un automatisme de pilotage 57 (figure 1), prévu pour piloter à la fois le dispositif 23 d'entrainement en rotation de l'électrode négative, le dispositif de transfert anodique 35, le dispositif de transfert cathodique 39, le dispositif 47 de maintien du ciel de la cellule électrolytique sous une atmosphère de gaz neutre, et le dispositif 51 de recyclage de l'hydrogène gazeux. L'automatisme de pilotage 57 pilote également le chargeur-onduleur électrique 7 et échange des données avec le GIMS 9.

Avantageusement, le dispositif 51 de recyclage comprend une sonde 59 de mesure de la concentration d'hydrogène dans la phase gazeuse remplissant le ciel 49 de la cellule électrolytique. Cette sonde renseigne l'automatisme 57. Cet automatisme est programmé pour piloter le dispositif de recyclage 51 en fonction de la concentration en hydrogène mesurée par la sonde.

Le fonctionnement du dispositif de stockage d'énergie va maintenant être détaillé.

On suppose ici que toutes les cellules électrolytiques 5 sont pilotées de la même façon. Seul le fonctionnement d'une cellule sera décrit ci-dessous.

Comme indiqué plus haut, quand la cellule électrolytique est en charge, c'est-à-dire accumule l'énergie électrique, le chargeur-onduleur 7 maintient l'électrode négative 21 à une polarité négative et l'électrode positive 15 à une polarité positive.

Le dispositif 39 alimente le compartiment cathodique 17 en électrolyte cathodique à partir du réservoir 37. Dans l'exemple de la figure 2, l'électrolyte cathodique est refoulé par l'organe 42 vers la rampe 43 et s'écoule sur la génératrice située au sommet de la surface externe 25 de l'électrode négative 21.

Le dispositif de transfert anodique 35 soutire l'électrolyte dans le compartiment anodique 11 pour le transférer vers le réservoir anodique 33.

Le dispositif 47 maintient le ciel 49 sous pression de gaz neutre. L'électrode négative 21 est entrainée en rotation par le dispositif d'entrainement 23.

Une partie des ions Fe²⁺ de l'électrolyte cathodique 19 sont réduits en Fe et se dépose sur la surface externe 25 de l'électrode négative tournante 21. Par ailleurs, sous l'effet du soutirage exercé par le dispositif de transfert 35, l'électrolyte cathodique traverse l'électrode positive poreuse 15 jusqu'au compartiment anodique 11. En traversant l'électrode positive poreuse 15, le reste des ions Fe²⁺ sont oxydés en ions Fe³⁺. L'ajout d'électrolyte cathodique frais et le soutirage de l'électrolyte anodique permettent de maintenir la composition de l'électrolyte cathodique et la composition de l'électrolyte anodique sensiblement constantes dans le temps, en dépit du dépôt de fer sur l'électrode négative.

Par ailleurs, la sonde 59 scrute en permanence la concentration d'hydrogène dans la phase gazeuse. L'automatisme de pilotage 57, en fonction de la concentration d'hydrogène mesurée, commande au dispositif 51 de recyclage de l'hydrogène gazeux de prélever une partie de la phase gazeuse dans le ciel 49. Le dispositif 51 la réinjecte sous l'électrode positive 15, dans le compartiment anodique. Cette phase gazeuse comprend essentiellement le gaz neutre, et des traces d'hydrogène. Cette phase gazeuse réinjectée forme des bulles qui remontent à travers le compartiment anodique 11 jusqu'à l'électrode positive poreuse 15. Au contact de l'électrode positive poreuse, l'hydrogène gazeux H₂ est oxydé en ions H⁺.

De manière avantageuse, le chargeur-onduleur 7 est piloté pour inverser périodiquement, de manière temporaire, le sens de circulation du courant. Ceci provoque une redissolution d'une petite fraction du fer déposé sur l'électrode négative, et empêche la création de cristaux de tailles importantes sur l'électrode négative. Pendant la circulation du courant en sens inverse, la circulation d'électrolyte anodique et cathodique est interrompue.

Ces cristaux en effet pourraient en effet constituer des reliefs à la surface de l'électrode négative, qui pourraient venir en contact avec l'électrode positive, interrompre la charge de la cellule électrolytique, et donc diminuer sa capacité.

Par exemple, le chargeur-onduleur 7 est piloté pour faire circuler un courant alterné dans ce but. Typiquement, le rapport entre la quantité de courant cathodique et la quantité de courant anodique est compris entre 5 et 10.

Quand la cellule électrolytique fonctionne en générateur d'énergie, l'électrode négative 21 a une polarité négative et l'électrode positive 15 a une polarité positive. Le dispositif 47 maintient le ciel 49 de la cellule électrolytique sous pression de gaz neutre. La cellule 5 alimente le chargeur-onduleur 7. Le dispositif 51 de recyclage de l'hydrogène pendant cette phase est généralement maintenu à l'arrêt par l'automatisme de pilotage 57, car il n'y a normalement pas de dégagement d'hydrogène gazeux..

Le dispositif de transfert 35 prélève l'électrolyte anodique dans le réservoir 33 et le transfère jusqu'au compartiment anodique 11. Le dispositif de transfert 39 prélève de l'électrolyte cathodique dans le compartiment cathodique 17, par exemple via la tuyauterie plongeante 45, et transfère celui-ci jusque dans le réservoir cathodique 37.

Le dispositif d'entrainement 23 entraine l'électrode négative 21 en rotation à une vitesse fonction du courant appelé.

Sous l'effet de l'injection d'électrolyte anodique dans le compartiment anodique 11, l'électrolyte traverse l'électrode positive poreuse 15. Au passage, les ions Fe³⁺ sont réduits en Fe²⁺. Au niveau de l'électrode négative 21, le fer préalablement déposé est oxydé en Fe²⁺.

## Revendications

1. Dispositif de stockage d'énergie électrique comprenant une pluralité de cellules électrolytiques (5) et un chargeur-onduleur électrique (7), chaque cellule électrolytique (5) comprenant :
- un compartiment anodique (11) rempli par un électrolyte anodique (13) comprenant au moins des ions Fe³⁺ ;
- une électrode positive (15) plongée dans l'électrolyte anodique (13) et raccordée électriquement à une première borne du chargeur-onduleur (7);
- un compartiment cathodique (17) rempli par un électrolyte cathodique (19) comprenant au moins des ions Fe²⁺, le compartiment cathodique (17) étant séparé du compartiment anodique (11) par une barrière poreuse;
- une électrode négative (21) plongée dans l'électrolyte cathodique (19) et raccordée électriquement à une seconde borne du chargeur-onduleur (7) ;
le chargeur-onduleur (7) étant agencé pour sélectivement soit charger électriquement le dispositif de stockage (1) en faisant circuler un courant électrique dans un premier sens provoquant un dépôt de fer à l'électrode négative (21), soit décharger électriquement le dispositif de stockage (1) en laissant circuler le courant électrique dans un second sens opposé au premier provoquant une dissolution du fer déposé à l'électrode négative (21) ;
**caractérisé en ce que** l'électrode négative (21) et l'électrode positive (15) sont disposées en vis-à-vis, la cellule électrolytique (1) comprenant un dispositif (23) d'entraînement en rotation de l'électrode négative (21) par rapport à l'électrode positive (11) autour d'un axe de rotation (X).

2. Dispositif selon la revendication 1, **caractérisé en ce que** l'électrode négative (21) présente une surface externe (25) cylindrique, coaxiale à l'axe de rotation (X), sur laquelle se dépose le fer.

3. Dispositif selon la revendication 1 ou 2, **caractérisé en ce que** l'électrode positive (15) comporte une partie (27) en forme de secteur de cylindre, coaxiale à l'axe de rotation (X).

4. Dispositif selon l'une quelconque des revendications précédentes, **caractérisé en ce que** l'électrode positive (15) est poreuse pour l'électrolyte anodique et/ou cathodique, et définit la barrière entre le compartiment anodique (11) et le compartiment cathodique (17).

5. Dispositif selon l'une quelconque des revendications précédentes, **caractérisé en ce que** l'électrode positive (15) est en titane ou en éponge de titane ou en un alliage de titane.

6. Dispositif selon l'une quelconque des revendications précédentes, **caractérisé en ce que** l'électrode positive (15) est recouverte d'un revêtement de TiN.

7. Dispositif selon l'une quelconque des revendications précédentes, **caractérisé en ce que** l'électrode positive (15) est un tissu constitué d'au moins un fil entrelacé, en titane ou en un alliage de titane.

8. Dispositif selon l'une quelconque des revendications précédentes, **caractérisé en ce que** l'électrode positive (15) est en un matériau électriquement conducteur, recouvert de magnétite.

9. Dispositif selon l'une quelconque des revendications précédentes, **caractérisé en ce que** la cellule électrolytique (5) comprend :
- un réservoir (33) d'électrolyte anodique ;
- un dispositif (35) de transfert anodique susceptible de transférer l'électrolyte anodique entre le réservoir (33) d'électrolyte anodique et le compartiment anodique (11) ;
- un réservoir (37) d'électrolyte cathodique ;
- un dispositif (39) de transfert cathodique susceptible de transférer l'électrolyte cathodique entre le réservoir d'électrolyte cathodique (37) et le compartiment cathodique (17).

10. Dispositif selon la revendication 9, **caractérisé en ce que** l'axe de rotation (X) de l'électrode négative (21) est sensiblement horizontal, le dispositif (39) de transfert cathodique comprenant une rampe (43) de distribution d'électrolyte cathodique disposée au dessus de l'électrode négative (21).

11. Dispositif selon l'une quelconque des revendications précédentes, **caractérisé en ce qu'**il comprend un dispositif (47) prévu pour maintenir un ciel (49) de la cellule électrolytique (5) sous une atmosphère de gaz neutre, par exemple sous pression d'argon.

12. Dispositif selon la revendication 11, **caractérisé en ce que** le ciel (49) de la cellule électrolytique (5) est maintenu à une pression supérieure à la pression autour de la cellule électrolytique (5), de préférence supérieure de 1 à 10 daPa à la pression autour de la cellule électrolytique (5).

13. Dispositif selon l'une quelconque des revendications précédentes, **caractérisé en ce que** le chargeur-onduleur (7) est agencé pour, pendant la charge du dispositif de stockage (1), inverser temporairement le sens de circulation du courant.

14. Dispositif selon l'une quelconque des revendications précédentes, **caractérisé en ce que** le chargeur-onduleur (7) est agencé pour, pendant la charge du dispositif de stockage (1), faire circuler un courant alterné.

## Patentansprüche

1. Vorrichtung zum Speichern von elektrischer Energie, die mehrere Elektrolytzellen (5) und eine elektrische Lade- und Wellenformungseinrichtung (7) umfasst, wobei jede Elektrolytzelle (5) Folgendes umfasst:
- ein Anodenfach (11), das mit einem anodischen Elektrolyt (13) gefüllt ist, der wenigstens Fe³⁺-Ionen enthält;
- eine positive Elektrode (15), die in den anodischen Elektrolyt (13) getaucht ist und mit einem ersten Anschluss der Lade- und Wellenformungseinrichtung (7) elektrisch verbunden ist;
- ein Katodenfach (17), das mit einem katodischen Elektrolyt (19) gefüllt ist, der wenigstens Fe²⁺-Ionen enthält, wobei das Katodenfach (17) von dem Anodenfach (11) durch eine poröse Sperre getrennt ist;
- eine negative Elektrode (21), die in den katodischen Elektrolyt (19) getaucht ist und mit einem zweiten Anschluss der Lade- und Wellenformungseinrichtung (7) elektrisch verbunden ist;
wobei die Lade- und Wellenformungseinrichtung (7) dafür ausgelegt ist, wahlweise entweder die Speichervorrichtung (1) elektrisch zu laden, indem sie einen elektrischen Strom in einer ersten Richtung fließen lässt, der eine Eisenablagerung bei der negativen Elektrode (21) hervorruft, oder die Speichervorrichtung (1) elektrisch zu entladen, indem sie den elektrischen Strom in einer zu der ersten Richtung entgegengesetzten zweiten Richtung fließen lässt, der eine Lösung des Eisens, das auf der negativen Elektrode (21) abgelagert ist, hervorruft;
**dadurch gekennzeichnet, dass** die negative Elektrode (21) und die positive Elektrode (15) einander gegenüber angeordnet sind, wobei die Elektrolytzelle (1) eine Vorrichtung (23) zum rotatorischen Antreiben der negativen Elektrode (21) in Bezug auf die positive Elektrode (11) um eine Drehachse (X) umfasst.

2. Vorrichtung nach Anspruch 1, **dadurch gekennzeichnet, dass** die negative Elektrode (21) eine zylindrische äußere Oberfläche (25) aufweist, die zu der Drehachse (X) koaxial ist und auf der sich das Eisen ablagert.

3. Vorrichtung nach Anspruch 1 oder 2, **dadurch gekennzeichnet, dass** die positive Elektrode (15) einen Teil (27) in Form eines Zylindersektors aufweist, der zu der Drehachse (X) koaxial ist.

4. Vorrichtung nach einem der vorhergehenden Ansprüche, **dadurch gekennzeichnet, dass** die positive Elektrode (15) für den anodischen und/oder den katodischen Elektrolyt porös ist und die Sperre zwischen dem Anodenfach (11) und dem Katodenfach (17) definiert.

5. Vorrichtung nach einem der vorhergehenden Ansprüche, **dadurch gekennzeichnet, dass** die positive Elektrode (15) aus Titan oder aus einem Titanschwamm oder aus einer Titanlegierung besteht.

6. Vorrichtung nach einem der vorhergehenden Ansprüche, **dadurch gekennzeichnet, dass** die positive Elektrode (15) mit einer TiN-Beschichtung bedeckt ist.

7. Vorrichtung nach einem der vorhergehenden Ansprüche, **dadurch gekennzeichnet, dass** die positive Elektrode (15) ein Gewebe ist, das aus wenigstens einem geflochtenen Draht aus Titan oder einer Titanlegierung gebildet ist.

8. Vorrichtung nach einem der vorhergehenden Ansprüche, **dadurch gekennzeichnet, dass** die positive Elektrode (15) aus einem elektrisch leitenden Material, das mit Magnetit bedeckt ist, besteht.

9. Vorrichtung nach einem der vorhergehenden Ansprüche, **dadurch gekennzeichnet, dass** die Elektrolytzelle (5) Folgendes umfasst:
- einen Vorratsbehälter (13) für den anodischen Elektrolyt;
- eine Vorrichtung (35) für anodische Übertragung, die den anodischen Elektrolyt zwischen dem Vorratsbehälter (33) für den anodischen Elektrolyt und dem Anodenfach (11) übertragen kann;
- einen Vorratsbehälter (37) für den katodischen Elektrolyt;
- eine Vorrichtung (39) für katodische Übertragung, die den katodischen Elektrolyt zwischen dem Vorratsbehälter (37) für den katodischen Elektrolyt und dem Katodenfach (17) übertragen kann.

10. Vorrichtung nach Anspruch 9, **dadurch gekennzeichnet, dass** die Drehachse (X) der negativen Elektrode (21) im Wesentlichen horizontal ist, wobei die Vorrichtung (39) für katodische Übertragung eine Rampe (43) für die Verteilung des katodischen Elektrolyts, der über der negativen Elektrode (21) angeordnet ist, umfasst.

11. Vorrichtung nach einem der vorhergehenden Ansprüche, **dadurch gekennzeichnet, dass** sie eine Vorrichtung (47) umfasst, die vorgesehen ist, um eine Decke (49) der Elektrolytzelle (5) unter einer Neutralgasatmosphäre, beispielsweise auf einem Argondruck, zu halten.

12. Vorrichtung nach Anspruch 11, **dadurch gekennzeichnet, dass** die Decke (49) der Elektrolytzelle (5) auf einem Druck gehalten wird, der höher als der Druck um die Elektrolytzelle (5), vorzugsweise um 1 bis 10 daPa höher als der Druck um die Elektrolytzelle (5), ist.

13. Vorrichtung nach einem der vorhergehenden Ansprüche, **dadurch gekennzeichnet, dass** die Lade- und Wellenformungseinrichtung (7) dafür ausgelegt ist, während des Ladens der Speichervorrichtung (1) die Fließrichtung des Stroms vorübergehend umzukehren.

14. Vorrichtung nach einem der vorhergehenden Ansprüche, **dadurch gekennzeichnet, dass** die Lade- und Wellenformungseinrichtung (7) dafür ausgelegt ist, während des Ladens der Speichervorrichtung (7) einen Wechselstrom fließen zu lassen.

## Claims

1. An electrical energy storage device comprising a plurality of electrolytic cells (5) and an electrical charger/inverter (7), each electrolytic cell (5) comprising:
- an anode compartment (11) filled with an anode electrolyte (13) comprising at least Fe³⁺ ions;
- a positive electrode (15) submerged in the anode electrolyte (13) and electrically connected to a first terminal of the charger/inverter (7);
- a cathode compartment (17) filled with a cathode electrolyte (19) comprising at least Fe²⁺ ions, the cathode compartment (17) being separated from the anode compartment (11) by a porous barrier;
- a negative electrode (21) submerged in the cathode electrolyte (19) and electrically connected to a second terminal of the charger/inverter (7);
the charger/inverter (7) being arranged to selectively either electrically charge the storage device (1) by circulating an electrical current in a first direction causing an iron deposit at the negative electrode (12), or electrically deplete the storage device (1) by allowing an electrical current to circulate in a second direction opposite the first causing a dissolution of the iron deposited at the negative electrode (21);
**characterized in that** the negative electrode (21) and the positive electrode (15) are positioned opposite one another, the electrolytic cell (1) comprising a device (23) for rotating the negative electrode (21) relative to the positive electrode (11) around a rotation axis (X).

2. The device according to claim 1, **characterized in that** the negative electrode (21) has a cylindrical outer surface (25), coaxial to the rotation axis (X), on which the iron is deposited.

3. The device according to claim 1 or 2, **characterized in that** the positive electrode (15) includes a part (27) in the form of a cylinder sector, coaxial to the rotation axis (X).

4. The device according to any one of the preceding claims, **characterized in that** the positive electrode (15) is porous for the anode and/or cathode electrolyte, and defines the barrier between the anode compartment (11) and the cathode compartment (17).

5. The device according to any one of the preceding claims, **characterized in that** the positive electrode (15) is made from titanium or sponge titanium or a titanium alloy.

6. The device according to any one of the preceding claims, **characterized in that** the positive electrode (15) is covered with a TiN covering.

7. The device according to any one of the preceding claims, **characterized in that** the positive electrode (15) is a fabric made from at least one interwoven wire, made from titanium or a titanium alloy.

8. The device according to any one of the preceding claims, **characterized in that** the positive electrode (15) is made from an electrically conductive material, covered with magnetite.

9. The device according to any one of the preceding claims, **characterized in that** the electrolytic cell (5) comprises:
- an anode electrolyte reservoir (33);
- an anode transfer device (35) able to transfer the anode electrolyte between the anode electrolyte reservoir (33) and the anode compartment (11);
- a cathode electrolyte reservoir (37);
- a cathode transfer device (39) able to transfer the cathode electrolyte between the cathode electrolyte reservoir (37) and the cathode compartment (17).

10. The device according to claim 9, **characterized in that** the rotation axis (X) of the negative electrode (21) is substantially horizontal, the cathode transfer device (39) comprising a cathode electrolyte distribution ramp (43) positioned above the negative electrode (21).

11. The device according to any one of the preceding claims, **characterized in that** it comprises a device (47) provided to maintain a sky (49) of the electrolytic cell (5) under a neutral gas atmosphere, for example under argon pressure.

12. The device according to claim 11, **characterized in that** the sky (49) of the electrolytic cell (5) is kept at a pressure greater than the pressure around the electrolytic cell (5), preferably greater than 1 to 10 daPa at the pressure around the electrolytic cell (5).

13. The device according to any one of the preceding claims, **characterized in that** the charger/inverter (7) is arranged so as, during charging of the storage device (1), to temporarily reverse the circulation direction of the current.

14. The device according to any one of the preceding claims, **characterized in that** the charger/inverter (7) is arranged so as, during charging of the storage device (1), to circulate an alternating current.
